# EUROPEAN PATENT APPLICATION

(11) **EP 4 424 558 A1**
(43) Date of publication of application: **04.09.2024**
(21) Application number: 21961950.9
(22) Date of filing: 29.10.2021
(51) Int. Cl.: B60R 11/02, G09F 9/30

(54) **VEHICLE-MOUNTED DISPLAY SCREEN CONTROL SYSTEM**

(71) Applicant: Zhejiang Smart Intelligence Technology Co., Ltd., Ningbo, Zhejiang 315336 (CN)
(72) Inventor: CAI, Hongjie, Hangzhou Bay New District Ningbo, Zhejiang 315336 (CN); YANG, Jun, Hangzhou Bay New District Ningbo, Zhejiang 315336 (CN); WANG, Congbin, Hangzhou Bay New District Ningbo, Zhejiang 315336 (CN); JIANG, Jian, Hangzhou Bay New District Ningbo, Zhejiang 315336 (CN)
(74) Representative: Zaboliene, Reda
(86) International application number: PCT/CN2021/127717
(87) International publication number: WO 2023/070598

(57) **Abstract**

Disclosed is a vehicle-mounted display screen control system, comprising: a sliding rail, the sliding rail being arranged along a vertical direction of a center console of a vehicle; a display screen, mounted on the sliding rail and capable of moving vertically along the sliding rail, and rotating horizontally relative to the sliding rail; a drive mechanism used drive the display screen to ascend and descend along the sliding rail, and to rotate horizontally; and a control mechanism, the control mechanism comprising multiple function modes, and the control mechanism being used to detect eye position information of a driver and control the drive mechanism to adjust the position of the display screen according to the function mode and/or the eye position information of the driver. The vehicle-mounted display screen control system disclosed in the present invention, by means of detecting eye position information of a driver, and by means of adjusting the position of the display screen according to the eye position information, can adapt to drivers having different heights and sitting postures.

## Description

### BACKGROUND OF THE APPLICATION

### Field of the Application

The present invention relates to the field of vehicle body structure, and more particularly to a vehicle-mounted display screen control system.

### Description of Related Art

As demand for vehicle human-computer interaction functions is getting higher and higher, the functions of vehicle display have become increasingly rich in recent years. In order to obtain the best viewing effect, an angel of the vehicle display should be adjusted, because people in the vehicle have various of sitting postures and viewing angles. However, it is inconvenient to adjust an angle of a traditional vehicle display, thus affecting the user experience and driving safety, making the structure being complex, and occupying large capacity of the vehicle.

The foregoing description is provided to provide general background information and does not necessarily constitute prior art.

### BRIEF SUMMARY OF THE APPLICATION

### Technical Problem

It is inconvenient to adjust an angle of a traditional vehicle display, thus affecting the user experience and driving safety, making the structure being complex, and occupying large capacity of the vehicle.

### Technical Solution

The object of the present application is to provide a vehicle-mounted display screen control system that can adjust positions of display screen under several modes.

A vehicle-mounted display screen control system provided in the present invention includes:
a sliding rail, the sliding rail is arranged along an up and down direction of a central control panel of a vehicle;
a display screen, the display screen is mounted on the sliding rail, capable of moving up and down along the sliding rail, and capable of transversely rotating relative to the sliding rail;
a driving mechanism, the driving mechanism is configured to drive the display screen moving up and down along the sliding rail and transversely rotating;
a control mechanism, the control mechanism includes a plurality of function modes, the control mechanism is configured to detect position information of eyes of a driver, and control the driving mechanism to adjust position of the display screen according to the function mode and/or the position information of eyes of the driver.

Furthermore, the function modes includes a driving mode and a playing mode;
in the driving mode, the control mechanism controls the driving mechanism to adjust position of the display screen according to the position information of eyes of the driver, until an angle defined by a display surface of the display screen and the eyes of the driver is minimum;
in the playing mode, the control mechanism controls the driving mechanism to drive the display screen moving to a topmost end of the sliding rail and transversely rotating for 90 degree.

Furthermore, it further includes a movable seat. In the playing mode, the control mechanism adjusts the seat according to the position information of eyes of the driver, until the angle defined by the display surface of the display screen and the eyes of the driver is minimum.

Furthermore, the control mechanism works on the driving mode when the vehicle is moving; the control mechanism switches to the driving mode when the vehicle is started.

Furthermore, the control mechanism switches function modes when the control mechanism receives a mode switching signal, and the mode switching signal includes: at least one of physical key input, screen virtual key input, voice input, gesture order, and mobile terminal order.

Furthermore, the control mechanism includes:
an eye position sensor, the eye position sensor is integrated in an in-car camera, and the eye position sensor is configured to detect position of eyes of driver;
a control module, the control module is connected to the eye position sensor and the control module, the control module includes a plurality of function modes.

Furthermore, the in-car camera sends the mode switching signal to the control module when it identifies the gesture order.

Furthermore, the driving mechanism includes:
a translating module, the translating module is configured to drive the display screen move along the sliding rail;
a rotating module, the rotating module is configured to drive the display screen transversely rotate relative to the sliding rail;
a swinging module, the swinging module is configured to drive the display screen swing left and right relative to the sliding rail.

Furthermore, the control mechanism is connected to the translating module, the rotating module and the swinging module, and the control mechanism drives the display screen to move up and down, swing left and right, and transversely rotate by controlling the translating module, the rotating module and the swinging module.

Furthermore, the sliding rail is an arc-shaped curved sliding rail. A convex surface of the curved sliding rail faces the front of the central control panel, and a concave surface of the curved sliding rail faces the rear of the central control panel.

### BRIEF DESCRIPTION OF THE DRAWINGS

FIG. 1 is a schematic view showing a vehicle-mounted display screen control system according to a first embodiment of the present invention when the first support positioned on the top end of a curved sliding rail.
FIG. 2 is a schematic view of vehicle-mounted display screen control system of FIG. 1 when the first support positioned on the bottom end of the curved sliding rail.
FIG. 3 is a schematic view of a vehicle-mounted display screen control system according to a second embodiment of the present invention.
FIG. 4 is a schematic view of the vehicle-mounted display screen control system of FIG. 3 when a slider is positioned on another position of the curved sliding rail.
FIG. 5 is a schematic view of the vehicle-mounted display screen control system of FIG. 3 under an A-A viewing angle with the display screen hidden.
FIG. 6 is a schematic view of a vehicle-mounted display screen control system according to a third embodiment of the present invention.
FIG. 7 is a schematic view of the vehicle-mounted display screen control system of FIG. 6 under a B-B viewing angle with the display screen hidden.

### DETAILED DESCRIPTION OF THE APPLICATION

The following will provide a further detailed description of the specific implementations of the present application in conjunction with the accompanying drawings and embodiments. The following embodiments are used to illustrate the present application, but are not intended to limit the scope of the present application.

### First Embodiment

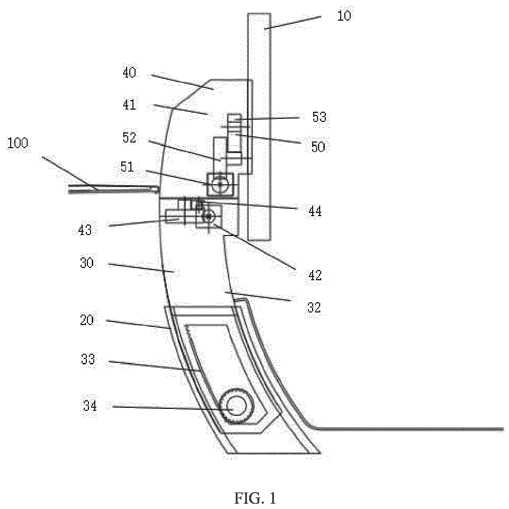

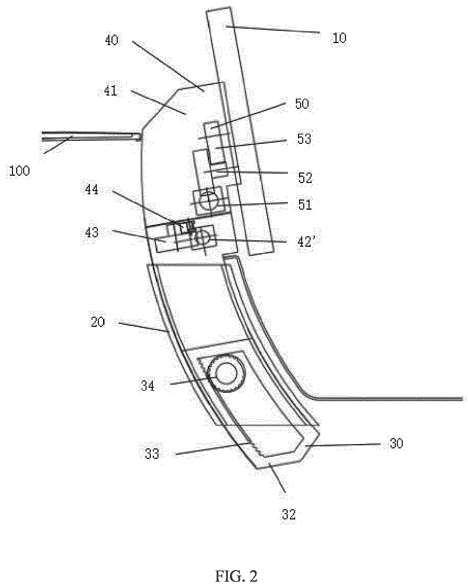

Referring to FIG. 1 to FIG. 2, a vehicle-mounted display screen control system of the first embodiment of the present invention, applied in a vehicle, includes a display screen 10, a sliding rail, a driving mechanism, a control mechanism (not shown) and a movable seat (not shown). In the embodiment, the sliding rail is a curved sliding rail 20, and the curved sliding rail 20 is arranged along an up and down direction of a central control panel 100. The driving mechanism includes a translating module 30, a swinging module 40, and a rotating module 50. The translating module 30 is configured to drive the display screen 10 performing curvilinear motion up and down along the curved sliding rail 31. The rotating module 50 is connected to the display screen 10 to force the display screen 10 to transversely rotate. The swinging module 40 is connected to the rotating module 50 to force the display screen 10 and the rotating module 50 to swing left and right.

The translating module 30 includes a first support 32, a curved rack 33, a first gear 34, a first electric motor (not shown) and a first worm wheel (not shown). The first support 32 is able to perform curvilinear motion along the curved sliding rail 20. The first worm wheel and the first gear 34 are mounted in the central control panel 100. The curved rack 33 is mounted in the first support 32 and parallel to the curved sliding rail 20. An output shaft of the first electric motor is connected to an input end of the first worm wheel, an output end of the first worm wheel meshes with the first gear 34, and the first gear also meshes with the curved rack 33.

A rotary speed transferred from the first electric motor to the first gear 34 is reduced by the first worm wheel. The first gear 34 is driven by the first electric motor and drives the curved rack 33 to move, thereby driving the first support 32 move up and down along the curved sliding rail 20. An angle defined by display surface of the display screen and the horizontal plane changes as the first support 32 positioned at different positions of the curved sliding rail 20.

The translating module 30 enables the display screen 10 going up and down. An angle defined by the display screen 10 and the horizontal plane changes as the display screen 10 positioned at different positions, so as to match drivers having different heights and sitting postures and match different positions of a seat. Therefore, the driver with obvious sitting posture can catch sight of the display screen 10.

In another embodiment, the curved rack 33 may be disposed in the central control panel 100, and the first electric motor, the first worm wheel and the first gear 34 may be disposed in the first support 32. The first gear still meshes with the curved rack 33, the first electric motor drives the first gear 34 to move along the curved rack 33, thus forcing the first support 32 to move along the curved sliding rail 20.

The swing unit 40 includes a second support 41, a second electric motor 42, a second worm wheel 43 and a second gear 44. The second support 41 is disposed on the upper part of the first support 32, and is rotatablely connected to the first support 32. The second electric motor 42 and the second worm wheel 43 are mounted in the first support 32, and the second gear 44 is disposed at the bottom of the second support 41 and fixed to the second support 41. The second gear 44 meshes with an output end of the second worm wheel 43, and an output shaft of the second electric motor 42 is connected with the input end of the second worm wheel 43. The second electric motor 42 drives the second gear 44 to rotate so as to drive the second support 41 swing left and right relative to the first support 32, after a rotary speed of the second electric motor 42 is decreased by the second worm wheel 43. Thereby, the display screen 10 is capable of swinging left and right to make that it is convenient for the driver or co-driver to watch or operate the display screen 10. It has a simple and credible structure and occupies little capacity of the vehicle, because the swinging module 40 to effect swing function to swing left and right of the display screen 10 and the translating module 30 to effect lifting function of the display screen 10 are separately disposed.

The display screen 10 is arranged on the direction of the second support 41 facing a cockpit, and the display screen 10 and the second support 41 are movably connected via the rotation unit 50. The rotating module 50 is configured to enable the display screen 10 to transversely rotate relative to the second support 41, and includes a third motor 51, a third worm wheel 52 and a third gear 53. The third motor 51 and the third worm wheel 52 are mounted in the second support 41. The third gear 52 is mounted on the back of the display screen 10, and the third gear 53 meshes with an output end of the third worm wheel 52, and an input end of the third worm wheel 52 is connected with the output shaft of the third motor 51. The third electric motor 51 drives the third gear 53 to rotate after the third worm wheel 52 reduces the rotary speed transferred from the third electric motor 51, thus driving the display screen 10 to rotate relative to the second support 32. In this embodiment, the angle of rotation of the display screen 10 relative to the second support 41 is in a range of from 0° to 90°, so that the display screen 10 may be shifted between a horizontal display mode and a vertical display mode.

Referring to FIG. 1, the curved sliding rail 20 is an arc-shaped curved sliding rail, with the convex surface facing the front of the vehicle and the concave surface facing the rear of the vehicle. By reason of the tangent to a top end of the curved sliding rail 20 being perpendicular to the horizontal plane, a display screen of the display screen 10 is perpendicular to the horizontal plane when the first support 32 is at the top end of the curved sliding rail 20.

The control mechanism includes an eye position sensor and a control module. The eye position sensor is integrated in an in-car camera, and the eye position sensor is configured to detect eyes position of driver. The in-car camera is able to detect gesture order. The eye position sensor is based on the principle of eye tracking, and the spatial coordinates, the mathematical model of the horizontal movement of the human eye and the mathematical model of the vertical movement of the human eye are pre-stored in the eye position sensor. The sensor obtains inclined angle relative to the horizontal plane of human eye according to the mathematical model of the horizontal movement of the human eye, and inclined angle relative to the vertical plane of human eye according to the mathematical model of the vertical movement of the human eye, and calculates moving angle of human eye according to the horizontal inclined angle and vertical inclined angle, which is convenient for obtain certain position information of human eye according to the moving angle and the spatial coordinates.

The in-car camera identifies gesture orders including but not limit to, thumbs up, clapping hands, raising arms in a particular direction or at a particular angle. Specifically, the gesture is defined by key points of a finger located at different positions. Different gestures expresses different meanings. The gesture is identified by identifying the spatial coordinates of the key points. For example, the hand may include 21 key points, and the gesture expressed by the hand in the hand image may be identified according to the three-dimensional coordinates, when the spatial coordinates of the 21 key points are acquired. In the embodiment, the key points of the hand may be connected according to the skeletal structure of the hand, and the gesture expressed by the hand may be identified according to the three-dimensional coordinates of each key point of the hand. For example, a hand skeleton image is obtained by connecting the key points of the hand, and a gesture order may be obtained by identifying the hand skeleton image.

In the embodiment, the control module is an ECU (Electronic Control Unit, electronic control unit), and is connected to the first electric motor, the second electric motor 42, the third electric motor 51, the in-car camera and the movable seat. Drivers and passengers control start-stop and rotation direction of the first electric motor, the second electric motor 42, and the third electric motor 51 through the human-computer interaction and the algorithm in the ECU, thereby controlling the display screen 10 to lift, swing left and right or rotate. Therefore, it is convenient for drivers of different heights and different sitting postures to watch and operate the display screen 10. Also, the display screen 10 moves up and down via the curved sliding rail 20, and during moving up and down, an angle defined by the display surface of the display screen 10 and the horizontal plane changes.

Meanwhile, several functions are in the control module. In the embodiment, the function modes include at least a driving mode and a playing mode. In the driving mode, the eye position sensor senses the eye position information and sends the information to the control mechanism. The control mechanism controls the first electric motor to rotate according to the eye position information, so as to drive the display screen 10 to move up and down along the curved sliding rail 20 and drive the second electric motor 42 to rotate to drive the display screen 10 swing left and right until an angle defined by a display surface of the display screen 10 and the eyes of the driver is the minimum, i.e., the display screen 10 faces the driver.

In the playing mode, the first electric motor drives the display screen 10 to the top end of the curved sliding rail 20, and the third electric motor 51 drives the display screen 10 to rotate 90 degree. At this time, the display screen 10 is in the transversal screen mode, and the display surface is perpendicular to the horizontal plane, therefore it has a better display performance while playing entertainment information such as video and games. Also, the eye detecting module detects eye position information of the driver and sends the information to the control mechanism. The control mechanism adjusts the front and rear position, height and backrest angle of the movable seat according to the eye position information, until the angel defined by the display surface of the display screen 10 and eyes of the driver is the minimum.

In another embodiment, the mode switching signal may also be at least one of physical key input, screen virtual key input, voice input, gesture order, and mobile terminal order.

The control mechanism works on the driving mode when the vehicle is moving. When the playing mode is performed, the control mechanism switches the playing mode to the driving mode and controls the driving mechanism to adjust the display screen 10 in case that the vehicle is started.

In the vehicle-mounted display screen control system provided in the embodiment, in the driving mode, the eyes position information of the driver is detected and the display screen 10 is adjusted to go up and down according to the eyes position information so as to match drivers having different heights and sitting postures. Therefore, the driver with obvious sitting posture can catch sight of the display screen 10. In the playing mode, the display screen 10 may be adjusted to the topmost position automatically, so that it is comfortable when the driver and passenger watch the display screen 10. In the playing mode, position of the seat may be adjusted according to the position of the display screen 10, so as to match drivers having different heights and sitting postures. Therefore, the driver with obvious sitting posture can catch sight of the display screen 10. In the playing mode, the display screen 10 rotates with 90 degree automatically to make the display screen switched from a horizontal screen to a vertical screen, thus better entertainment experience for driver and passenger being produced. When the vehicle is moving, the vehicle-mounted display screen control system is forbidden to switch the driving mode to the playing mode, and it is forbidden to switch the driving mode to the playing mode automatically, so as to ensure safety of the vehicle during driving.

### Second Embodiment

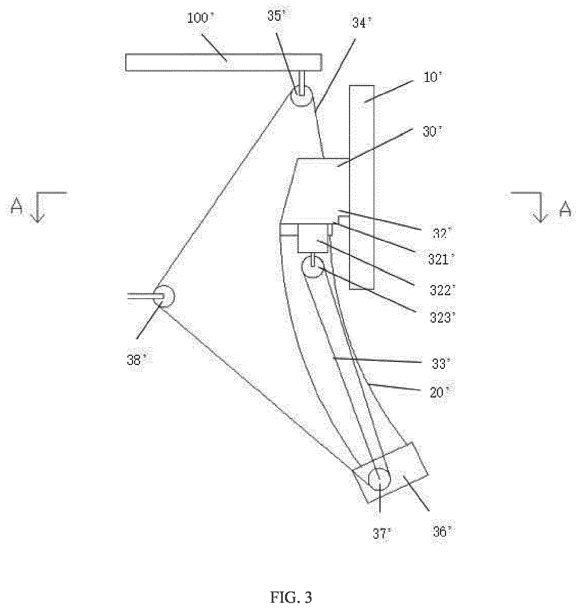

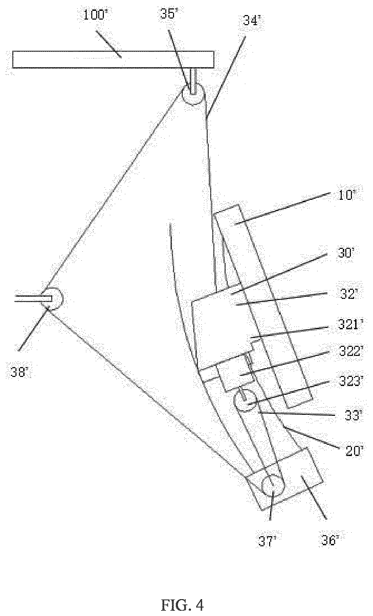

Referring to FIG. 3 to FIG. 5, difference between a vehicle-mounted display screen control system of a second embodiment of the present invention and the above described vehicle-mounted display screen control system of the first embodiment is that the driving mechanism includes a translating module 30' and a rotating module 40'. The rotating module 40' is connected to a display screen 10' to make the display screen 10' being capable of transversely rotating. The translating module 30' is connected to the rotating module 40' to make the display screen 10' and the rotating module 40' is capable of linearly moving along the up and down direction.

The translating module 30' includes a first support 32', a first pull rope 33', a second pull rope 34', a first fixed pulley 35', a first electric motor 36', a first wire wheel 37', a second fixed pulley 38', a rolling shutter mechanism (not shown) and a first worm wheel (not shown). A curved sliding rail 20', the first electric motor 36', the first wire wheel 37', the first fixed pulley 35', the second fixed pulley 38' and the first worm wheel are mounted in a central control panel 100'. The curved sliding rail 20' is arranged along an up and down direction of the central control panel 100', and the first support 32' is capable of performing curvilinear motion along the curved sliding rail 20'. The first wire wheel 37' is disposed below the curved sliding rail 20', and the first fixed pulley 35' is disposed upon the curved sliding rail 20'. An output shaft of the first electric motor 36' is connected to an input end of the first worm wheel, and an output end of the first worm wheel drives the first wire wheel 37' to rotate. A rotary speed transferred from the first electric motor 36' to the first wire wheel 37' is reduced by the first worm wheel.

The first support 32' includes a seat body 321', a slider 322' and a movable pulley 323'. The slider 322' and the movable pulley 323' are mounted in the seat body 321'. The slider 322' is capable of performing curvilinear motion along the curved sliding rail 20'. The movable pulley 323' is disposed below the slider 322' and follows the movement of the slider 322'.

The rear ends of the first pull rope 33' and the second pull rope 34' are connected to each other to form one pull rope and then sleeved on a curved outer edge of the first wire wheel 37'. The front end of the first pull rope 33' is fixed to the central control panel 100' with the joint being below the curved sliding rail 20' after going around a curved outer edge of the movable pulley 323'. The first pull rope 33' is pulled downward to pull the movable pulley 323' downward, and then pulling the slider 322' to perform curvilinear motion downward along the curved sliding rail 20'.

The front end of the second pull rope 34' is fixed to the seat body 321' after going around a curved outer edge of the fixed pulley 38'. The second pull rope 34' is pulled upward to pull the seat body 321' upward, thereby pulling the slider 322' upward along the curved sliding rail 20'. In the embodiment, the first pull rope 33' and the second pull rope 34' further go around the second fixed pulley 38' to change a direction of a pulling force, so that it is easy to arrange the pull ropes in the central control panel 100'. In another embodiment, more fixed pulleys 38' maybe occupied to further change the direction of the pulling force.

The first pull rope 33' and the second pull rope 34' are synchronously driven by the first wire wheel 37'. The first pull rope 33' pulls the first support 32' downward when the first wire wheel 37' rotates in a first rotation direction. The second pull rope 34' pulls the first support 32' upward when the first wire wheel 37' rotates in a second rotation direction opposite to the first rotation direction. The way of the first wire wheel 37' driving the first pull rope 33' and the second pull rope 34' may be friction force manner of belt-belt pulley or mechanical force manner of gears meshing each other.

In the embodiment, the translating module 30' enables the display screen 10' to move up and down. Further, an angle formed by the display screen 10' and the horizontal plane changes as the display screen 10' positioned at different positions, so as to match drivers having different heights and sitting postures and match different positions of a seat. Therefore, the driver with obvious sitting posture can catch sight of the display screen 10'. The direction of the pulling force is changed by the fixed pulley 38', and the movable pulley 323' is occupied to save labor. Several pulleys cooperate with each other to enable one single wire wheel to control the display screen 10' to go up and down, thus making the structure be simple, and occupying small capacity of the central control panel 100'.

In another embodiment, the first wire wheel 37' may be arranged at other positions with arranging more fixed pulleys 38' to change the direction of the pulling force. Movable pulleys 323' may be disposed on top end and bottom end of the first support 32' to further save labor, thus reducing demand for the output torque of the first electric motor 36'.

A hall sensor (not shown) is disposed on the first electric motor 36'. When the display screen 10' encounters resistance during the lifting process, such as being blocked by a human hand, the torque on the output shaft of the first electric motor 36' will change. When the hall sensor senses that the torque of the first electric motor 36' changes, the first electric motor 36' is stopped to prevent the first electric motor 36' from being locked. In other embodiments, a slipping or clutch mechanism may be disposed on the first electric motor 36 to avoid damage the first electric motor 36' when the display screen 10' encounters resistance during moving.

The rolling shutter mechanism includes a scroll member (not shown) and a rolling shutter member. The rolling shutter member is a long, windable structure, and may be made of metal or plastic. The scroll member is arranged in the central control panel 100'. An end of the rolling shutter mechanism is connected to the bottom of the first support 32', and the other end is connected to the scroll member. The scroll member includes a rotating shaft and a torsion spring. The rotating shaft is connected to the rear end of the rolling shutter member, and the torsion spring is connected to the rotating shaft to drive the rotating shaft to rotate, thereby pulling to coil the rolling shutter member.

When the first support 32' moves upward along the curved sliding rail 20', the rolling shutter member maybe pulled and unfolded to cover the curved sliding rail 20', so as to prevent the curved sliding rail 20' from being exposed and affecting the appearance. When the first support 32' moves downward along the curved sliding rail 20', the scroll member pulls the rolling shutter member to be coiled and retracted.

Different texture and colors may be sprayed on the rolling shutter member to enhance the visual effect of the automotive interior. In other embodiments, the torsion spring may be alternated by an electric motor, and the electric motor drives the rotating shaft to pull to coil the rolling shutter member.

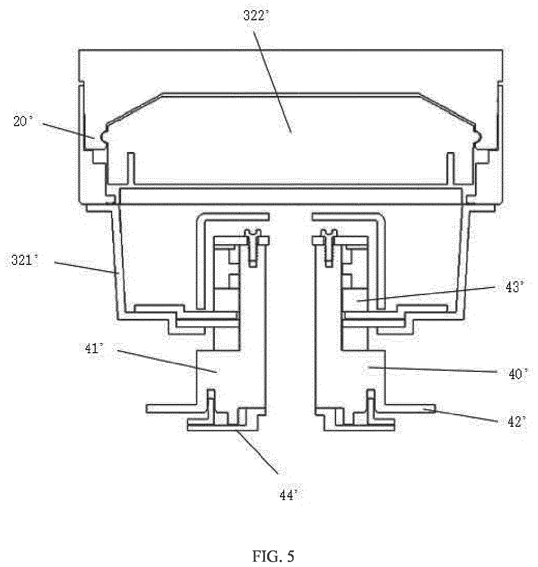

Referring to FIG. 5, the rotating module 40' includes a second support 41', a first gear 42', a bearing 43', a positioning pin plate 44', a second electric motor (not shown) and a second worm wheel (not shown). A receiving groove (not labeled) is defined in the seat body 321', and a rotation shaft (not labeled) is formed on the second support 41'. A front end of the rotation shaft is received in the receiving groove, and the display screen 10' is fixed on a rear end of the rotation shaft by the positioning pin plate 44'. The bearing 43' is located between the receiving groove and the rotation shaft, and is used to enable the second support 41' to transversely rotate relative to the first support 32', thereby enabling the display screen 10' to transversely rotate relative to the first support 32'.

The second electric motor and the second worm wheel are mounted on the first support 32', and the first gear 42' is fixed to the second support 41'. The first gear 42' meshes with an output end of the second worm wheel, and an output shaft of the second electric motor is connected with an input end of the second worm wheel. The second electric motor drives the first gear 42' to rotate after the second worm wheel reducing the rotary speed transferred from the second electric motor, thus driving the second support 41' to transversely rotate relative to the first support 32'. In this embodiment, the rotation angle of the display screen 10' relative to the second support 41' is in a range from 0° to 90°, so that the display screen 10' may be shifted between a horizontal display mode and a vertical display mode.

Referring to FIG. 3, the curved sliding rail 20' is an arc-shaped sliding rail, with the convex surface facing the front of the vehicle and the concave surface facing the rear of the vehicle. By reason of the tangent to a top end of the curved sliding rail 31 being perpendicular to the horizontal plane, a display screen of the display screen 10' is perpendicular to the horizontal plane when the display screen is at the top end.

The ECU (Electronic Control Unit, electronic control unit) is connected to the first electric motor 36' and the second electric motor. Driver and passenger control start-stop and rotation direction of the first electric motor 36' and the second electric motor through the human-computer interaction and the algorithm in the ECU, thereby controlling the display screen 10' to lift or rotate. Therefore, it is convenient for drivers of different heights and different sitting postures to watch and operate the display screen 10'.

The angle defined between the display surface of the display screen 10' and the horizontal plane changes in the lifting process of the display screen 10', because the display screen 10' is driven to go up and down via the curved sliding rail 20'. For example, in the playing mode, the first electric motor 36' drives the display screen 10' to rise to the top end of the curved sliding rail 20', and simultaneously a third electric motor 51' drives the display screen 10' to rotate 90 degrees. At this time, the display screen 10' is in the transversal mode, and the display surface is perpendicular to the horizontal plane, so that the display screen 10' has better display performance during showing amusement information such as videos and games.

### Third Embodiment

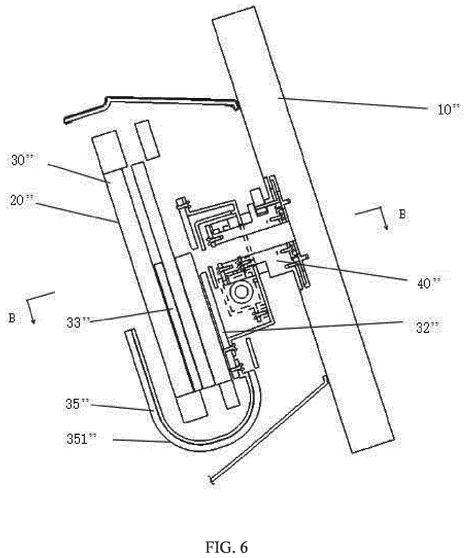

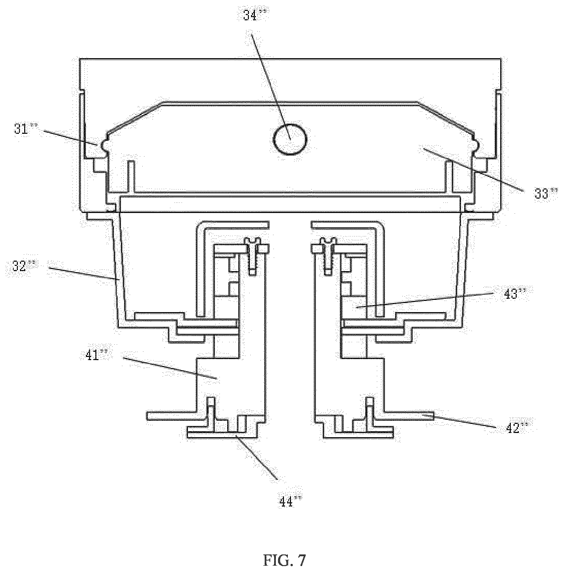

Referring to FIG. 6 and FIG. 7, difference between a vehicle-mounted display screen control system of a third embodiment of the present invention and the above described vehicle-mounted display screen control system of the first embodiment and the second embodiment is that the sliding rail is a liner sliding rail 20" arranged along an up and down direction. The driving mechanism includes a translating module 30" and a rotating module 40". The rotating module 40" is connected to the display screen 10" to make the display screen 10" rotating transversely. The translating module 30" is connected to the rotating module 40" to make the display screen 10" and the rotating module 40" linearly moving along the up and down direction.

The translating module 30" includes a first support 32", a slider 33", a lead screw 34", a rolling shutter mechanism 35", a first electric motor (not shown), a first worm wheel (not shown) and a first gear (not shown). The linear sliding rail 20", the lead screw 34", the first electric motor, the first worm wheel are mounted in the central control panel 100". The linear sliding rail 20" is arranged along the up and down direction of the central control panel. The lead screw 34" is parallel to the linear sliding rail 20". The first gear is fixed on an end of the lead screw 34". The first support 32" is capable of performing linear motion along the linear sliding rail 20". The slider 33" is mounted in the first support 32".

The lead screw 34" has external screw thread, the slider 33" defines an internal screw hole, and the internal screw hole threads with the external screw thread of the lead screw 34". The internal screw hole engages with the external screw thread, and also a plurality of rolling balls are disposed between the hole and the lead screw 34", so as to decrease the friction between the slider 33" and the lead screw 34" to make the slider 33" being capable of moving up and down along the lead screw 34".

An output shaft of the first electric motor is connected to an input end of the first worm wheel, and an output end of the first worm wheel meshes with the first gear. A rotary speed transferred from the first electric motor to the first gear is reduced by the first worm wheel. The first gear drives the lead screw 34" to rotate around the axis as driven by the first electric motor, thus driving the slider 33" on the lead screw 34" to move up and down along the lead screw 34" and driving the first support 32" to move up and down along the linear sliding rail 20".

The translating module 30" enables the display screen 10" to move up and down so as to match drivers having different heights and sitting postures and match different positions of a seat. Therefore, the driver with obvious sitting posture can catch sight of the display screen 10".

A hall sensor (not shown) is dispose on the first electric motor. When the display screen 10" encounters resistance in the lifting process, such as being blocked by a human hand, the torque on the output shaft of the first electric motor will change. When the hall sensor senses that the torque of the first electric motor changes, the first electric motor is stopped to prevent the first electric motor from being locked. In other embodiments, a slipping or clutch mechanism may be disposed on the first electric motor to avoid damage the first electric motor when the display screen 10" encounters resistance during moving.

The rolling shutter mechanism 35" includes a scroll member (not shown) and a rolling shutter member 351". The rolling shutter member 351" is a long, windable structure, and may be made of metal or plastic. The scroll member is arranged in the central control panel. An end of the rolling shutter mechanism 351" is connected to the bottom of the first support 32", and the other end is connected to the scroll member. When the first support 32" moves upward along the linear sliding rail 20", the rolling shutter member 351" maybe pulled and unfolded to cover the linear sliding rail 20", so as to prevent the linear sliding rail 20" from being exposed and affecting the appearance. When the first support 32" moves downward along the linear sliding rail 20", the scroll member pulls the rolling shutter member 351" to be coiled and retracted.

The scroll member may be driven by electric motor or driven to coil the rolling shutter member 351" by a torsion spring. Different texture and colors may be sprayed on the rolling shutter member 351" to enhance the visual effect of the automotive interior.

Referring to FIG. 7, the rotating module 40" includes a second support 41", a second gear 42", a bearing 43", a positioning pin plate 44", a second electric motor (not shown) and a second worm wheel (not shown). The first support 32" defines a receiving groove (not labeled), and the second support 41" forms a rotation shaft (not labeled). A front end of the rotation shaft is received in the receiving groove, and the display screen 10" is fixed on a rear end of the rotation shaft via the positioning pin plate 44". The bearing 43" is disposed between the receiving groove and the rotation shaft, so as to enable the second support 41" to transversely rotate relative to the first support 32", and then enable the display screen 10" to transversely rotate relative to the first support 32".

The second electric motor and the second worm wheel are mounted on the first support 32", and the second gear 42" and the second support 41" are fixedly connected. The second gear 42" meshes with an output end of the second worm wheel, and an output shaft of the second electric motor is connected with an input end of the second worm wheel. The second electric motor drives the first gear 42" to rotate after the second worm wheel reduces the rotary speed transferred from the second electric motor, thus driving the second support 41" to transversely rotate relative to the first support 32". In this embodiment, the rotation angle of the display screen 10" relative to the second support 41" is in a range of 0° to 90°, so that the display screen 10" may be shifted between a horizontal display mode and a vertical display mode.

In the drawings, the size and relative sizes of layers and regions may be exaggerated for clarity. It should be understood that when an element such as a layer, region or substrate is referred to as being "formed on" "disposed on" or "mounted on" another element, it may be directly disposed on the other element or be disposed on an intermediate element. In contrast, when an element is referred to as being "directly formed on" or "directly disposed on" another element, no intermediate element is present.

In this description, the terms "up", "down", "front", "back", "left", "right", "top", "bottom", "in", "out", "vertical", "horizontal" mentioned to indicate orientation or position relationship are defined based on the position of the structure in the figures and the position between the structures in the figures, only for the clarity and convenience of expressing the technical solution. It should be understood that the use of these directional words should not limit the scope of protection in the present application.

In this description, unless otherwise clearly specified and limited, the terms "mounted", "connected" and "connection" should be interpreted in a broad sense, for example, it may be a fixed connection, a detachable connection, or an integral connection; it may be a mechanical connection or an electrical connection; it may be a direct connection or an indirect connection through an intermediary, and it may be the internal communication of two components. Those of ordinary skill in the art can understand the specific meanings of the above terms in specific situations.

In this description, the sequence adjectives to describe elements "first", "second" etc. are only used to distinguish similar objects, and are not intended to be used to describe a specific sequence or order, time, space, grade or other limitation.

In this description, the terms "include", "comprise" or any of its variants, is intended to cover non-exclusive inclusion, except for the elements listed, also including other elements that are not explicitly listed.

In this description, unless otherwise specified, the terms "several", "a plurality of" is intended to cover two or more.

The above examples and the features in the examples can be combined with each other. For the clarity and convenience of expressing the technical solution, not all possible combinations of the features in above described embodiments are disclosed. In the case of no conflict, the combinations of the features should be in the scope of the present description.

The above are embodiments of the present disclosure only, and should not be deemed as limitations to the scope of the present disclosure. It should be noted that variations and improvements will become apparent to those skilled in the art to which the present disclosure pertains. Therefore, the scope of the present disclosure is defined by the appended claims.

### Industrial applicability

In the vehicle-mounted display screen control system provided in the present invention, the eyes position information of the driver is detected and the position of the display screen is adjusted according to the eyes position information so as to match drivers having different heights and sitting postures. The display screen is adjusted with different adjusting method as in accordingly different modes, thereby providing better user experience. In the playing mode, the display screen is driven to the topmost position and transversely rotate with 90 degree automatically. Therefore, it is comfortable when the driver and passenger watch the display screen so as to produce better entertainment experience for driver and passenger. In the playing mode, the position of the seat is adjusted according to position of the display screen, so as to match drivers having different heights and sitting postures. Therefore, the driver with obvious sitting posture can catch sight of the display screen.

## Claims

1. A vehicle-mounted display screen control system, **characterized in that**, comprising:
a sliding rail, the sliding rail is arranged along an up and down direction of a central control panel of a vehicle;
a display screen, the display screen is mounted on the sliding rail, capable of moving up and down along the sliding rail, and capable of transversely rotating relative to the sliding rail;
a driving mechanism, the driving mechanism is configured to drive the display screen moving up and down along the sliding rail and transversely rotating;
a control mechanism, the control mechanism includes a plurality of function modes, the control system is configured to detect position information of eyes of a driver, and control the driving mechanism to adjust position of the display screen according to the function mode and/or the position information of eyes of the driver.

2. The vehicle-mounted display screen control system as claimed in claim **1**, wherein the function modes comprises a driving mode and a playing mode;
in the driving mode, the control mechanism controls the driving mechanism to adjust position of the display screen according to the position information of eyes of the driver, until an angle defined by a display surface of the display screen and the eyes of the driver is minimum;
in the playing mode, the control mechanism controls the driving mechanism to drive the display screen moving to a topmost end of the sliding rail and transversely rotating for 90 degree.

3. The vehicle-mounted display screen control system as claimed in claim **2**, wherein further comprises a movable seat, the control mechanism adjusts the seat according to the position information of eyes of the driver, until the angle defined by a display surface of the display screen and the eyes of the driver is the minimum.

4. The vehicle-mounted display screen control system as claimed in claim **2**, wherein the control mechanism works on the driving mode when the vehicle is moving; the control mechanism switches to the driving mode when the vehicle is started.

5. The vehicle-mounted display screen control system as claimed in claim **2**, wherein the control mechanism switches function modes when receiving a mode switching signal, and the mode switching signal includes: at least one of physical key input, screen virtual key input, voice input, gesture order, and mobile terminal order.

6. The vehicle-mounted display screen control system as claimed in claim **5**, wherein control mechanism comprises:
an eye position sensor, the eye position sensor is integrated in an in-car camera, and the eye position sensor is configured to detect eyes position of driver;
a control module, the control module is connected to the eye position sensor and the control module, the control module comprises a plurality of function modes.

7. The vehicle-mounted display screen control system as claimed in claim **6**, wherein the in-car camera sends the mode switching signal to the control module when the in-car camera identifies the gesture order.

8. The vehicle-mounted display screen control system as claimed in claim **1**, wherein the driving mechanism comprises:
a translating module, the translating module is configured to drive the display screen moving along the sliding rail;
a rotating module, the rotating module is configured to drive display screen transversely rotating relative to the sliding rail;
a swinging module, the swinging module is configured to drive the display screen swinging left and right relative to the sliding rail.

9. The vehicle-mounted display screen control system as claimed in claim **8**, wherein the control mechanism is connected to the translating module, the rotating module and the swinging module, and the control mechanism drives the display screen to move up and down, swing left and right, and transversely rotate by controlling the translating module, the rotating module and the swinging module.

10. The vehicle-mounted display screen control system as claimed in claim **1**, wherein the sliding rail is an arc-shaped curved sliding rail, a convex surface of the curved sliding rail faces the front of the central control panel, and a concave surface of the curved sliding rail faces the rear of the central control panel.
